Europäisches Patentamt

European Patent Office

Office européen des brevets

(11) Veröffentlichungsnummer: **0 013 984**
**B1**

(12) **EUROPÄISCHE PATENTSCHRIFT**

(45) Veröffentlichungstag der Patentschrift:
08.08.84

(51) Int. Cl.³: **G 03 B 21/32**

(21) Anmeldenummer: **80100357.5**

(22) Anmeldetag: **24.01.80**

(54) **Verfahren und Vorrichtung zum Umwälzen (Durchsetzen) eines endlosen Bandes in einem Vorrat.**

(30) Priorität: **29.01.79 AT 642/79**

(43) Veröffentlichungstag der Anmeldung:
**06.08.80 Patentblatt 80/16**

(45) Bekanntmachung des Hinweises auf die Patenterteilung:
**08.08.84 Patentblatt 84/32**

(84) Benannte Vertragsstaaten:
**BE CH DE FR GB IT LU NL SE**

(56) Entgegenhaltungen:
**CH - A - 131 604**
**US - A - 1 463 992**
**US - A - 1 639 469**
**US - A - 2 020 521**
**US - A - 2 032 336**
**US - A - 3 337 149**

(73) Patentinhaber: **Burth, Willi, Marienplatz 4,
D-7980 Ravensburg (DE)**

(72) Erfinder: **Burth, Willi, Marienplatz 4, D-7980 Ravensburg
(DE)**

(74) Vertreter: **Fehners, Klaus Friedrich, Dipl.-Ing.
Dipl.-Wirtsch.-Ing. et al, Patentanwälte Dipl.-Ing. A.
Wedde Dipl.-Ing. K. Empl Dipl.-Ing., Dipl.-Wirtsch.-Ing. K.
Fehners Schumannstrasse 2, D-8000 München 80 (DE)**

## Beschreibung

Die Erfindung betrifft ein Verfahren zum Umwälzen (Durchsetzen) eines endlosen Bandvorrates, insbesondere eines Kino-Filmes, in einer Vorrichtung mit einer um eine vertikale Achse drehbar angeordneten und im wesentlichen horizontalen Auflage, auf welcher der Bandvorrat in Form von zwei konzentrischen, jedoch räumlich getrennten Wickeln aufliegt, wobei die äußere Windung des äußeren Wickels über einen externen schleifenartig herausgeführten Längenabschnitt des Bandes mit der inneren Windung des inneren Wickels und die innere Windung des äußeren Wickels unmittelbar über einen internen Längenabschnitt des Bandes mit der äußeren Windung des inneren Wickels verbunden ist.

Die Erfindung betrifft weiterhin, eine Vorrichtung zur Durchführung des Verfahrens zum Umwälzen (Durchsetzen) eines endlosen Bandvorrates, z. B. eines in einem Vorführgerät vorzuführenden Kino-Filmes, in einer Vorrichtung mit einer um eine vertikale Achse drehbar angeordneten und im wesentlichen horizontalen Auflage, auf welcher der Bandvorrat in Form von zwei konzentrischen, jedoch räumlich getrennten Wickeln aufliegt, wobei die äußere Windung des äußeren Wickels über einen externen, schleifenartig herausgeführten Längenabschnitt des Bandes mit der inneren Windung des inneren Wickels und die innere Windung des äußeren Wickels unmittelbar über einen internen Längenabschnitt des Bandes mit der äußeren Windung des inneren Wickels verbunden ist.

Ein solches eingangs genanntes Verfahren wird bei der aus der GB-PS 1 307 059 bekannten Vorrichtung angewendet, wobei der Vorrat des endlosen Bandes in Form von zwei unmittelbar ineinander übergehenden konzentrischen Wikkeln bereitgestellt ist. Optisch kann der Wickel als räumliche Einheit angesehen werden, funktionell ist er jedoch in einen äußeren und einen inneren Wickel aufteilbar. Während des Ablaufes des Verfahrens drehen sich innerer und äußerer Wickel mit unterschiedlichen Drehzahlen, welche jeweils abhängig sind von dem ab- bzw. zugeführten Band. Das, z. B. für eine Projektion durch ein Vorführgerät zu führende Filmband wird von der inneren Windung des inneren Wikkels aus dem aufgelegten Bandvorrat herausgeführt und nach Durchgang durch das Vorführgerät auf die äußere Windung des äußeren Wickels zugeführt. Da das herausgeführte bzw. nach der Projektion wieder zugeführte Band dieselbe Laufgeschwindigkeit aufweist, die innere bzw. äußere Windung des aufgelegten Bandvorrates jedoch verschieden große Durchmesser aufweisen, müssen sich innerer bzw. äußerer Wickel mit verschiedenen Umdrehungszahlen bewegen. Aus diesem Grunde wird bei dem bekannten Verfahren der innere Teil des aufgelegten Bandvorrates mit einer anderen Geschwindigkeit angetrieben als der äußere Teil des aufgelegten Wickels. Diese verschiedenen Drehzahlen werden durch besondere , durch die herausgeführten Bandelemente gesteuerten Reguliervorrichtungen beeinflußt. Nachteilig bei diesem Verfahren ist, daß die Drehzahlen des inneren bzw. äußeren Wickels ausschließlich in Abhängigkeit der jeweiligen inneren bzw. äußeren Windung der beiden Wickel gesteuert wird. Sämtliche, zwischen innerer Windung des inneren Wickels und äußerer Windung des äußeren Wickels liegenden übrigen, von innen nach außen gehend jeweils in ihrem Durchmesser um einen differentiell kleinen Betrag wachsenden Windungen bewegen sich mit unterschiedlichen Umdrehungsgeschwindigkeiten, welche zwischen denen der inneren bzw. äußeren Windung liegen. Zwangsläufig müssen sich sämtliche Windungen des Bandwickelvorrates um Differenzbeträge ihrer Umlaufgeschwindigkeiten aneinander vorbei bewegen, wodurch wiederum Reibungen zwischen den Bandoberflächen auftreten müssen.

Bei der nach dem bekannten Verfahren arbeitenden Vorrichtung wird der Bandvorrat von einer Auflage aufgenommen, welche aus einem, um eine vertikale Achse angeordneten stationären Kern besteht, um den den Wickel tragende und antreibende Elemente kreisförmig angeordnet sind. Diese Elemente bestehen aus zylindrischen Walzen, die mit ihren Längsachsen radial zur vertikalen Achse des Kernes und im festen Abstand zueinander angeordnet sind. Diese acht Walzen sind in zwei unabhängig voneinander antreibbare Gruppen zu je vier Walzen unterteilt, welche alternierend angeordnet sind. Vier Walzen der einen Gruppe sind mit ihren Längsachsen gegenüber der Horizontalen nach innen geneigt, so daß aus den nach oben liegenden Mantellinien der kreisförmig angeordneten vier Walzen gebildete gemeinsame Fläche einen, mit der Öffnung nach oben gerichteten, sehr flachen Trichter bildet. Die vier anderen Walzen der zweiten Gruppe weisen eine gegenüber den Walzen der ersten Gruppe entgegengesetzte Neigung auf, so daß die aus deren oberen Mantellinien gebildete gemeinsame Fläche einen mit der Spitze nach oben gerichteten Kegel bildet. Die nach innen geneigten Walzen tragen den äußeren Teil des Bandwickels, die nach außen geneigten Walzen den inneren Teil des Bandwickels.

Die dem stationären Kern naheliegenden Enden der Walzen sind mit Antriebsrädern verbunden, die auf zwei konzentrisch angeordneten Antriebstellern aufruhen, welche entsprechend den Neigungsunterschieden der Walzen der beiden Gruppen in verschiedenen Horizontalebenen angeordnet sind. Beide Walzengruppen können durch die voneinander unabhängigen Antriebsteller mit unterschiedlichen Geschwindigkeiten angetrieben werden.

Die äußeren Enden der Walzen ruhen auf festen Stützelementen auf. Der stationäre Kern besteht aus ebenfalls acht, jeweils in den Zwischenräumen der acht Walzen angeordneten, um vertikale Achsen drehbare Führungsrollen, gegen welche sich die innere Windung des inneren Wickels legt und gleichzeitig den kleinsten Durchmesser des Bandwickelvorrates bildet. Das dem Projektionsgerät zuzuführende Bandende wird aus dem inneren Umfang des Bandwickels heraus um eine der Führungsrollen herum und nach innen und schräg nach oben über den gesamten Bandwickel hinweg aus der Vorrichtung herausgeführt. Das vom Projektionsgerät herkommende Ende wird einfacherweise auf die äußere Windung des Bandwickels aufgewickelt.

Wie bereits vorstehend bei dem Verfahren geschildert, kann durch die Anordnung der zwei mit unterschiedlicher Geschwindigkeit angetriebenen Walzengruppen nur die genaue Umdrehungsgeschwindigkeit von zwei Windungen des aufgelegten Bandwickels eingestellt werden. Dies sind zwangsläufig die innere Windung bzw. die äußere Windung des Bandvorrates. Alle zwischen diesen beiden liegenden übrigen Windungen werden auf den sich drehenden Walzen eine zusätzliche Gleitbewegung ausführen müssen. Schließlich ist nachteilig, daß die Windungen im Laufe des gesamten Wickelvorganges eine stetig von außen nach innen gerichtete Wanderung über die beiden Walzengruppen durchführen müssen. Durch diesen Vorgang ist es nicht ausgeschlossen, daß die Bandoberflächen, welche gerade bei Filmmaterial äußerst schonend behandelt werden sollten, zu einer gegenseitigen Auflage kommen und beschädigt werden. Durch die geneigte Anordnung der Walzengruppen ergibt sich zusätzlich zur horizontalen Relativbewegung der Bandwindungen untereinander noch eine zweite vertikale Bewegung. Hierdurch ergeben sich zusätzliche Reibungen der Bandwickel gegeneinander und damit eine je Durchlauf zunehmende Beschädigung der Bandoberflächen.

Aufgabe der Erfindung ist es, sowohl ein Verfahren als auch eine Vorrichtung zum Umwälzen (Durchsetzen) eines endlosen Bandes in einem Vorrat so auszubilden, daß jegliche Reibung zwischen den aneinander liegenden Bändern bzw. Wickeln vermieden wird und der gesamte Wickelvorgang betriebssicher durchführbar ist, so daß insbesondere keine zu hohen Zugspannungen im Bandmaterial auftreten, wobei das Verfahren für verschiedene Filmmengen geeignet sein soll und die Vorrichtung darüber hinaus konstruktiv einfach herstellbar ist.

Diese Aufgabe wird dadurch gelöst, daß bei einem Verfahren der eingangs genannten Art die Aufteilung des Bandvorrates auf die beiden Wickel während des gesamten Umwälzvorganges sich ständig ändert, dergestalt, daß der Innendurchmesser des äußeren Wickels und der Außendurchmesser des inneren Wickels infolge einer größeren Wickelgeschwindigkeit des inneren Wickels gegenüber dem äußeren Wickel ständig größer werden und daß der Innendurchmesser des inneren Wickels sowie der äußere Durchmesser des äußeren Wickels ständig größer werden infolge der Bandabnahme vom inneren Wickel bzw. der Bandzufuhr zum äußeren Wickel, bis der Bandvorrat im äußeren Wickel aufgebraucht ist, worauf die Winkelgeschwindigkeit des inneren nunmehr den gesamten Bandvorrat enthaltenden Wickels umgeschaltet wird auf die Winkelgeschwindigkeit des bisherigen äußeren Wickels und sich erneut ein mit gegenüber dem dann äußeren Wickel größerer Winkelgeschwindigkeit sich drehenden neuer innerer Wickel bildet.

Vorteilhaft bei diesem erfindungsgemäßen Verfahren ist, daß durch die wegen des radialen Abstandes mögliche freie Drehbarkeit der beiden Wickel die beiden Wickel unabhängig voneinander verschieden schnell angetrieben werden können, ohne daß zwischen den Bandwindungen unterschiedliche Längsverschiebungen auftreten müssen und damit zwangsläufig eine Bandreibung auftritt.

Dadurch, daß der innere Wickel jeweils mit einer der Bandgeschwindigkeit des dem Projektor zuzuführenden Bandendes entsprechenden Umdrehungsgeschwindigkeit angetrieben und der äußere Bandwickel dagegen mit einer der vom Projektor ausgegebenen Bandgeschwindigkeit entsprechenden Aufwickelgeschwindigkeit angetrieben ist, dreht sich der innere Wickel wegen seines kleineren Durchmessers stets schneller als der äußere Wickel und da grundsätzlich sämtliche Windungen des inneren Wickels bzw. des äußeren Wickels nur die entsprechende Geschwindigkeit des jeweiligen Wickels haben können, ist ein gegenseitiges Bewegen der Windungen untereinander ausgeschlossen.

Durch die wesentlich schnellere Umdrehung des inneren Bandwickels wird im Laufe des Verfahrens erreicht, daß trotz Zuführung des aus dem Vorführgerät kommenden Bandes auf den äußeren Wickel dieser innerhalb einer Zeiteinheit vollständig auf den inneren Bandwickel umgewälzt bzw. durchgesetzt wird. Durch die Anpassung der Umdrehungsgeschwindigkeit des für eine kurze Zeiteinheit von wenigen Sekunden auf der Tragvorrichtung vorhandenen einzigen inneren Bandwickels auf die von der von außen zugeführten Bandlänge bestimmten Umdrehungsgeschwindigkeit, wird zwischen dem nunmehr einzigen vorhandenen Bandwickel und dem stationären Kern ein neuer innerer Wickel gebildet, welcher in seiner Winkelgeschwindigkeit der Abzugsgeschwindigkeit des Bandes angepaßt ist und es bildet sich zwischen dem neuen inneren Wickel und dem nunmehrigen äußeren Wickel eine beide verbindender interner Längenabschnitt.

In einer vorteilhaften Weiterbildung ist der Vorrat an endlosem Band in Form von mehr als zwei im wesentlichen in der gleichen Horizontalebene gelegenen Wickel bereitgestellt und sind die Winkelgeschwindigkeiten der zwischen dem äußeren und dem inneren Wickel gelegenen Wickel kleiner oder zeitweilig gleich der Winkelgeschwindigkeit des inneren Wickels und zeitweilig gleich oder größer der Winkelgeschwindigkeit des äußeren Wickels. Diese zusätzliche Anordnung von mehreren Wickeln zwischen innerem und äußerem Wickel ermöglicht es, den aufgelegten Bandwickelvorrat entsprechend seiner Zusammenstellung zu unterteilen. Dies kann insbesondere dann vorteilhaft sein, wenn es sich bei dem Bandvorrat um das gesamte innerhalb einer Zeiteinheit durchzuspielende Filmprogramm handelt und dieses z. B. aus mehreren einzelnen Filmen zusammengestellt ist, bzw. aus einem Film mit verschiedenen Akten besteht.

Vorteilhaft wird auf den oder die internen Band-Längenabschnitte zwischen den Wickeln bremsend eingewirkt und die durch das Überführen des Bandes von einem äußeren Wickel auf den nächstliegenden inneren Wickel entstehenden Windungen kommen ohne wesentlichen Luftabstand auf ihrer ganzen Länge unmittelbar aneinander zu liegen. Die durch die unterschiedliche Umdrehungszahl der einzelnen Bandwickel sich ergebende Geschwindigkeitsdifferenz wird durch die zwischen den Bandwickeln angeordneten internen Band-Längenabschnitte überbrückt. Diese bewirken ein Umwickeln des Bandvorrates von einem äußeren Bandwickel auf den inneren Bandwickel und bewirken, daß insbesondere bei einer leichten Abbremsung dieser Längenabschnitte der neu gewickelte innere Wickel ohne wesentlichen Luftabstand zwischen seinen Windungen entsteht und damit platzsparend ausgebildet ist.

Die der Erfindung gestellte Aufgabe wird weiterhin durch eine Vorrichtung der eingangs genannten Art dadurch gelöst, daß die Auflage aus mindestens drei, vollständig unabhängig voneinander um einen stationären Kern mit variablen Geschwindigkeiten drehbaren konzentrischen Ringscheiben besteht, wobei die äußere Ringscheibe mit in Abhängigkeit von einer die Aufwickelgeschwindigkeit steuernden Einrichtung änderbarer Drehzahl antreibbar und die innere Ringscheibe mit ebenfalls in Abhängigkeit von einer die Abwickelgeschwindigkeit steuernde Einrichtung änderbarer Drehzahl antreibbar ist und die Zwischen-Ring-Scheibe wahlweise mit entweder der äußeren Ringscheibe oder der inneren Ringscheibe entsprechenden Drehzahl antreibbar ist.

Durch die Ausbildung der Auflage als die Wickel antreibende konzentrische Ringscheiben ergibt sich eine konstruktiv einfache und das Bandmaterial gleichmäßig aufnehmende Tragvorrichtung. Die Anordnung der Ringscheiben geschieht in einfachster Weise konzentrisch um den in der Mitte der Vorrichtung befindlichen stationären Kern und bildet mit diesem eine im wesentlichen ebene Fläche, welche leicht zu reinigen und zu pflegen ist. Sämtliche Antriebsaggregate und Steuereinrichtungen sind entweder auf dem stationären Kern oder unterhalb der Ringscheiben bzw. unterhalb des stationären Kernes angeordnet und geschützt.

Dadurch, daß die verschiedenen Ringscheiben vollständig unabhängig voneinander und mit variablen Geschwindigkeiten und mit wahlweiser, freier Zuschaltung drehbar ausgebildet sind, kann sich der auf ihnen lagernde und im normalen Betriebsfalle in zwei Wickel aufgeteilte Filmvorrat ständig verändernd durch- bzw. umsetzen.

Vorteilhaft sind neben der Zwischen-Ringscheibe weitere, zwischen äußerer und innerer Ringscheibe gelegene Ringscheiben angeordnet. Diese weiteren Zwischen-Ringscheiben erlauben es, einen wesentlich größeren Bandvorrat auf die Vorrichtung aufzulegen und umzuwälzen.

Vorteilhaft liegt die Oberfläche aller Ringscheiben annähernd in der gleichen Rotationsebene, deren Achse in der Drehachse der Ringscheiben liegt.

Die äußere Ringscheibe und die innere Ringscheibe werden jeweils durch einen in seiner Drehzahl veränderbaren Motor angetrieben, wobei die Drehzahlen durch in Abhängigkeit der in der Zeiteinheit zugeführten bzw. abgeführten Länge an Band steuernden Einrichtung reguliert wird. Diese Ausbildung erlaubt, daß die beiden auf der Vorrichtung aufliegenden Bandwickel mit der betriebsmäßig richtigen Umdrehungsgeschwindigkeit angetrieben werden.

Vorteilhaft ist bei der erfindungsgemäßen Vorrichtung die die Abwickelgeschwindigkeit des inneren Bandwickels steuernde Einrichtung auf dem Kern befestigt. Diese Einrichtung spricht auf die Position und/oder Form des sich zwischen dem inneren Umgang des Bandwickels und der Einrichtung in Form einer losen Schleife erstreckenden Bandabschnittes an und beeinflußt abhängig von dessen Positions- bzw. Formänderungen die Drehzahl der inneren Ringscheibe.

Die die Aufwickelgeschwindigkeit des äußeren Bandwickels steuernde Einrichtung ist in Form eines unterhalb der Ringscheiben gelenkig gelagerten und um eine vertikale Achse horizontal schwenkbaren Hebelarmes ausgebildet, welcher an seinem über den äußeren Rand der äußeren Ringscheibe hinausragenden Ende eine um eine vertikale Achse drehbare Umlenkrolle trägt und um welche das aufzuwickelnde Band in Form einer Vorratsschlaufe zwischen Projektor und äußeren Wickel geführt ist.

Zwischen den aneinandergrenzenden Zwischen-Ringscheiben und der äußeren Ringscheibe sind jeweils Kupplungselemente angeordnet, welche so ausgebildet sind, daß sie bezogen auf die übliche Laufrichtung der Vorrichtung, eine größere Drehzahl der jeweils innenliegenden Ringscheiben zulassen und andererseits eine Mitnahme mit mindestens der Drehzahl der äußeren Ringscheibe gewährleistet ist. Dabei sind vorzugsweise die Kupplungselemente am äußeren Rand der Zwischen-Ringscheiben als um eine Horizontale, in Radialrichtung liegende und innerhalb einer tangential zum Rand der Ringscheiben verlaufenden Nut angeordnete Achse drehbare einarmige Hebel und als am inneren Rand der Zwischen-Ringscheiben und der äußeren Ringscheibe in Radialrichtung horizontal verlaufend angeordnete Mitnehmer ausgebildet, welche sich gegen die unter ihre Schwerkraft nach unten hängenden einarmigen Hebel anlegen.

Dadurch, daß die innere Ringscheibe bzw. die von dieser inneren Ringscheibe mitgenommenen angrenzenden Zwischen-Ringscheiben mit einer größeren Umdrehungsgeschwindigkeit angetrieben werden als die nachfolgend nach außen angeordneten Zwischen-Ringscheiben bzw. die äußere Ringscheibe, ergibt sich zwangsläufig, daß die zwischen den einzelnen Zwischen-Ringscheiben bzw. der äußeren Ringscheibe angeordneten Kupplungselemente überholbar ausgebildet sein müssen, andererseits jedoch eine nach innen liegende Zwischen-Ringscheibe mitnehmen können müssen. Die vorzugsweise einfache Hebelausbildung erlaubt ein kontrollfreies und wartungsfreies Funktionieren der Kupplungselemente.

Weiter sind an den äußeren Rändern der inneren Ringscheibe und der Zwischen-Ringscheiben, mit Ausnahme der äußeren Zwischen-Ringscheibe schaltbare Kupplungen angeordnet, welche abhängig von dem Durchmesser des inneren Wickels schaltbar sind und die Zwischen-Ringscheiben entsprechend der Drehzahl der inneren Windung des inneren Wickels mitnehmen. Diese Kupplungen sind als hebelförmige Wippen ausgebildet, welche durch die Belastung infolge der Auflage von Windungen eines Bandwickels nach unten gedrückt werden und sich gegen die an den inneren Rändern der Zwischen-Ringscheiben und der äußeren Ringscheibe angeordneten Mitnehmer anlegen.

Diese als Wippen ausgebildeten Kupplungen erlauben es, daß die verschiedenen Zwischen-Ringscheiben je nachdem, ob sie vom Band frei oder von diesem belegt sind, sich an die nächstfolgende äußere Zwischen-Ringscheibe ankuppeln oder nicht. Diese Kupplungen sind so ausgebildet, daß sie selbsttätig arbeiten können und ausschließlich in Abhängigkeit des sich ständig ändernden Zustandes der aufgelegten Bandwickel arbeiten.

Vorteilhaft können die Zwischen-Ringscheiben jeweils einen eigenen motorischen, mit variabler Drehzahl steuerbaren Antrieb aufweisen. Diese Antriebe sind als Schrittmotoren ausgebildet, welche je nach Belegung der Zwischen-Ringscheiben mit Windungen gruppenweise zusammengeschaltet sind. Hierbei entfällt die Anordnung von Kupplungselementen zwischen den einzelnen Ringscheiben und die Anpassung der Umdrehungsgeschwindigkeiten der einzelnen Ringscheiben wird elektrisch durchgeführt.

Weiterhin ist es vorteilhaft, daß die Zwischen-Ringscheiben gleichgroße Flächen aufweisen. Hierdurch und durch konstruktive Erfordernisse, insbesondere durch den unterhalb des Zwischen-Ringes gelegenen Antrieb und durch die Anordnung einer Ringnut, in welcher Antriebs- bzw. Stützräder laufen können, ist es bedingt, daß die Breite der äußeren Zwischen-Ringscheibe nicht kleiner als 1 bis 2 Zentimeter sein kann.

Weiter weist die innere Ringscheibe mindestens die gleichgroße Fläche wie die Zwischen-Ringscheibe auf. Vorzugsweise weist die innere Ringscheibe jedoch eine um das 1,5 bis 4,0fache größere Fläche als die Zwischen-Ringscheibe auf. Hierdurch wird vorteilhaft erreicht, daß die der inneren Ringscheibe benachbarte Zwischen-Ringscheibe bereits weitgehend von aufliegendem Band frei ist, wenn die innere Ringscheibe von aufgewickeltem Band vollständig belegt ist. Diese vorzugsweise Ausbildung erlaubt ein technisch einwandfreies Arbeiten der erfindungsgemäßen Vorrichtung.

Weiterhin weist die äußere Ringscheibe mindestens die gleichgroße Fläche wie die Zwischen-Ringscheibe auf, vorzugsweise jedoch eine um das Doppelte größere Fläche. Durch diese Ausbildung ergibt sich, daß das auf die äußere Ringscheibe aufzuwickelnde Filmmaterial den äußeren Durchmesser der äußeren Ringscheibe nicht übersteigt und damit von der Tragvorrichtung herunterfallen kann.

Weiterhin ist die Fläche der inneren Ringscheibe kleiner als die Fläche des kleinsten, betriebsmäßig einzusetzenden Bandwickels. Vorzugsweise beträgt die Fläche der inneren Ringscheibe $1/3$ des betriebsmäßig eingesetzten Bandwickels. Darüber hinaus ist die Summe der Flächen der Zwischen-Ringscheiben mindestens gleichgroß, vorzugsweise größer der Fläche des größten abzuspielenden Bandwickels.

Durch die vorstehend genannten vorteilhaften Ausführungsformen der Vorrichtung ergibt sich eine einwandfreie Funktion und durch die vorzugsweisen Abmessungen der einzelnen Flächen ist gewährleistet, daß sowohl kleine als auch größere Bandvorräte mit ein und derselben Vorrichtung abgespielt werden können.

Der stationäre Kern weist auf seinem äußeren Umfang benachbart zum inneren Rand der inneren Ringscheibe im Abstand angeordnete, um vertikale Achsen drehbar gelagerte Rollen auf. Gegen diese Rollen legt sich bei der Bildung eines neuen inneren Wickels dessen innere Windung an und kann sich reibungsfrei mit der von der inneren Ringscheibe vorgegebenen Geschwindigkeit um den stationären Kern drehen.

Vorteilhaft können die konzentrisch angeordneten Ringscheiben mit ihren horizontalen Oberflächen treppenförmig aneinander liegen und die jeweils von innen nach außen folgende nächste Ringscheibe steigt um einen Betrag von wenigen Millimetern an. Die jeweils nach außen nächstfolgend angeordnete Ringscheibe übergreift mit ihren falzartig ausgebildeten Innenrand die nach innen benachbarte, um wenige Millimeter tiefer liegende Ringscheibe an deren Außenrand. Diese vorzugsweise Ausbildung der Vorrichtung verhindert, daß zwischen den einzelnen Ringscheiben nach oben offene Zwischenräume vorhanden sind, welche den Transport der Bandwindungen zwischen den Ringscheiben vom äußeren zum inneren Wickel behindern könnten.

Die konzentrisch angeordneten Ringscheiben können auch eine nach innen geneigte Oberfläche und in ihrer Gesamtheit die Form eines sehr flachen Trichters aufweisen.

Auf dem Kern ist eine der die Aufwickelgeschwindigkeit des Bandwickels regulierenden Steuereinrichtung nachgeschaltete Umlenkvorrichtung vorgesehen, welche das dem Projektor zuzuführende Band aus dem inneren Wickel heraus und über die Ringscheiben hinweg führt.

Eine die Erfindung nicht beschränkendes Ausführungsbeispiel wird anhand der Figuren beschrieben und anschließend der Verfahrensablauf dargestellt. Es zeigt

Fig. 1 eine Draufsicht der Vorrichtung,

Fig. 2 einen Schnitt gemäß der Linie II-II in Fig. 1,

Fig. 3 einen teilweisen Schnitt durch die Vorrichtung gemäß Linie III-III in Fig. 1,

Fig. 4 einen Schnitt gemäß Linie IV-IV in Fig. 3,

Fig. 5 einen Schnitt gemäß Linie V-V in Fig. 3,

Fig. 6 einen Schnitt gemäß Linie VI-VI in Fig. 1, und

Fig. 7 einen Schnitt gemäß Linie VII-VII in Fig. 6.

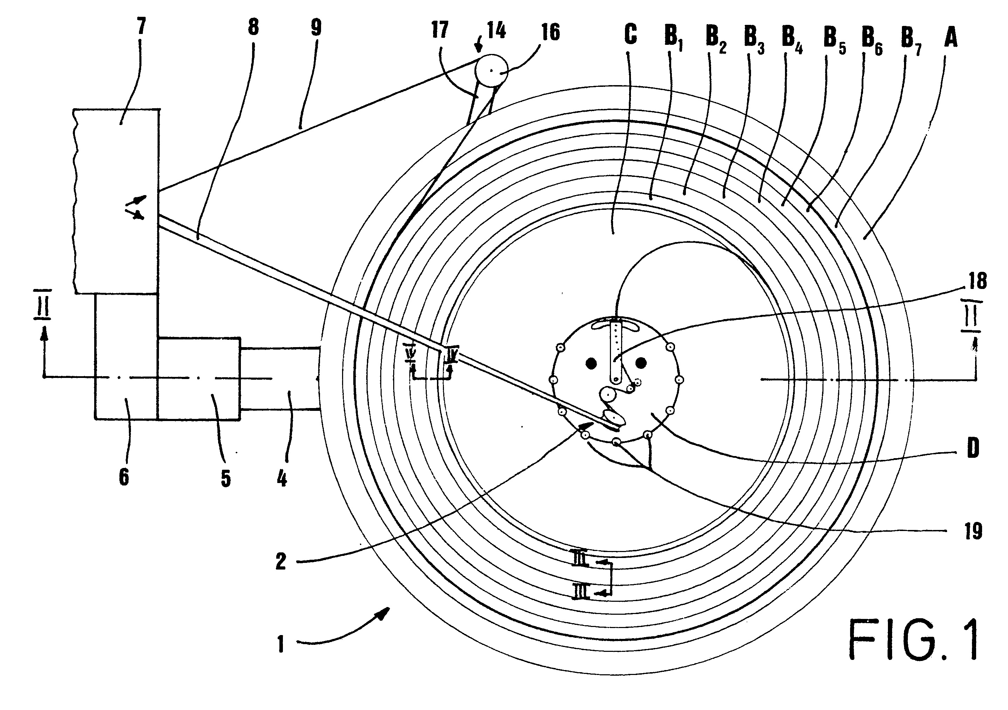

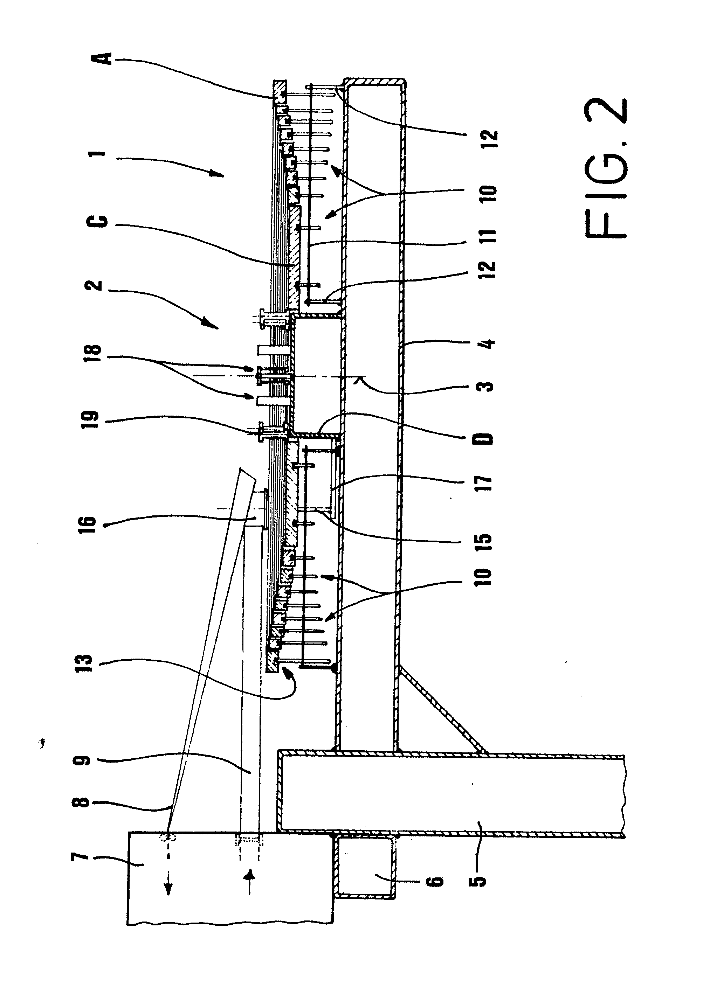

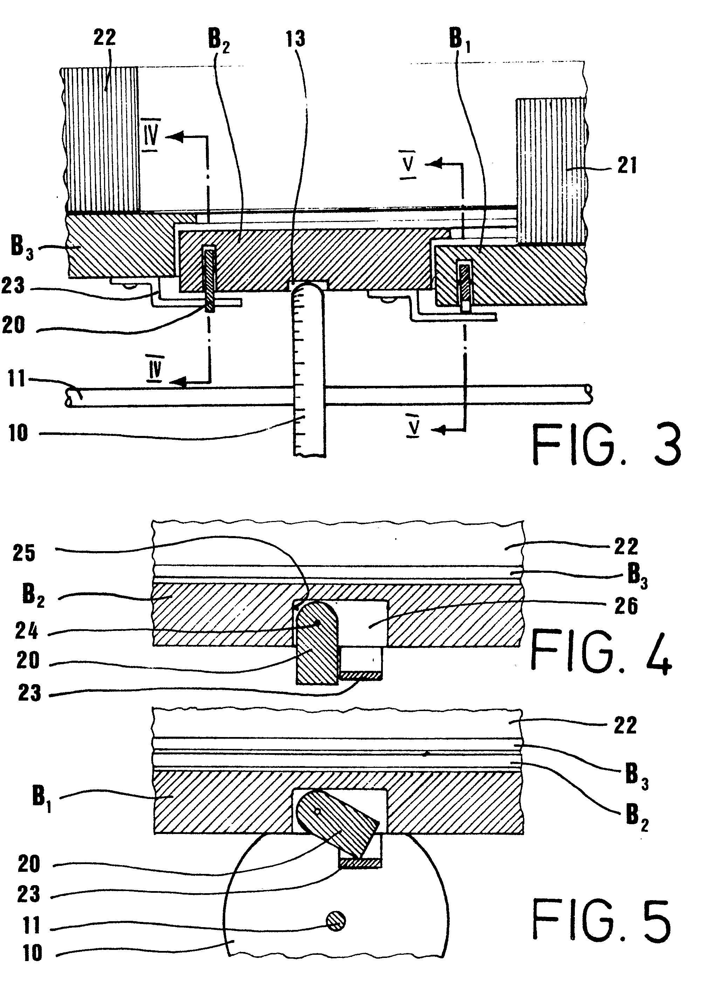

Die in den Fig. 1 und 2 veranschaulichte Ausführungsform der Vorrichtung zur Durchführung des Verfahrens zum Umwälzen (Durchsetzen) eines endlosen Bandes, zum Beispiel eines in einem Vorführgerät vorzuführenden Kinofilmes, umfaßt im wesentlichen eine Auflage 1, auf welcher der Bandwickel in einem Vorrat bereitgestellt ist und eine Entnahmevorrichtung 2, welche das Band aus dem inneren Umgang des bereitgestellten Bandwickels herausführt.

Die Auflage 1 besteht aus neun konzentrisch angeordneten kreisförmigen Ringscheiben, welche um eine gemeinsame vertikale Zentralachse 3 angeordnet sind. Ihrer, noch später bei der Darstellung des Verfahrens zu beschreibenden Funktion nach, unterteilen sich diese Ringscheiben in eine äußere Ringscheibe A, sieben Zwischen-Ringscheiben $B_1 - B_7$ und eine innere Ringscheibe C. Diese Ringscheiben drehen sich dem Uhrzeigersinn entgegengesetzt um einen zentral angeordneten stationären Kern D, welcher die Entnahmevorrichtung 2 trägt und auf einer kreuzförmig ausgebildeten, von einem Pfosten 5 gehaltenen Halterung 4 befestigt ist. An einer Konsole 6 des Pfostens 5 ist ebenfalls der Projektor 7 befestigt. Projektor 7 und Auflage 1 bzw. Halterung 4 sind in ihrer Höhe entsprechend den Bandführungen 8 und 9 aufeinander abgestimmt. Bezogen auf die Auflage 1 wird dieser über Bandführung 9 das von dem Projektor 7 abgegebene Band zugeführt und über Bandführung 8 das dem Projektor zuzuführende Band entnommen.

Halterung 4, Pfosten 5 und Konsole 6 sind aus bekannten I-Trägern oder aus Hohlprofilen hergestellt.

Die Zwischen-Ringscheiben $B_1 - B_7$ weisen sämtlich gleichgroße Kreisringflächen auf, wodurch die Breite jedes Zwischen-Ringes mit zunehmendem Durchmesser abnimmt. Die innere Ringscheibe C weist dagegen eine um das 4fache größere Fläche als diejenige der Zwischen-Ringscheiben auf.

Die äußere Ringscheibe A besitzt dagegen die doppelte Flächengröße einer Zwischen-Ringscheibe. Hierdurch wird vermieden, daß beim Aufwickeln des über die Bandführung 9 herangeführten Bandes die letzten Windungen eventuell von der äußeren Ringscheibe herabfallen könnten, obwohl es rechnerisch genügt, wenn die Flächengröße der äußeren Ringscheibe der Flächengröße einer Zwischen-Ringscheibe entspricht.

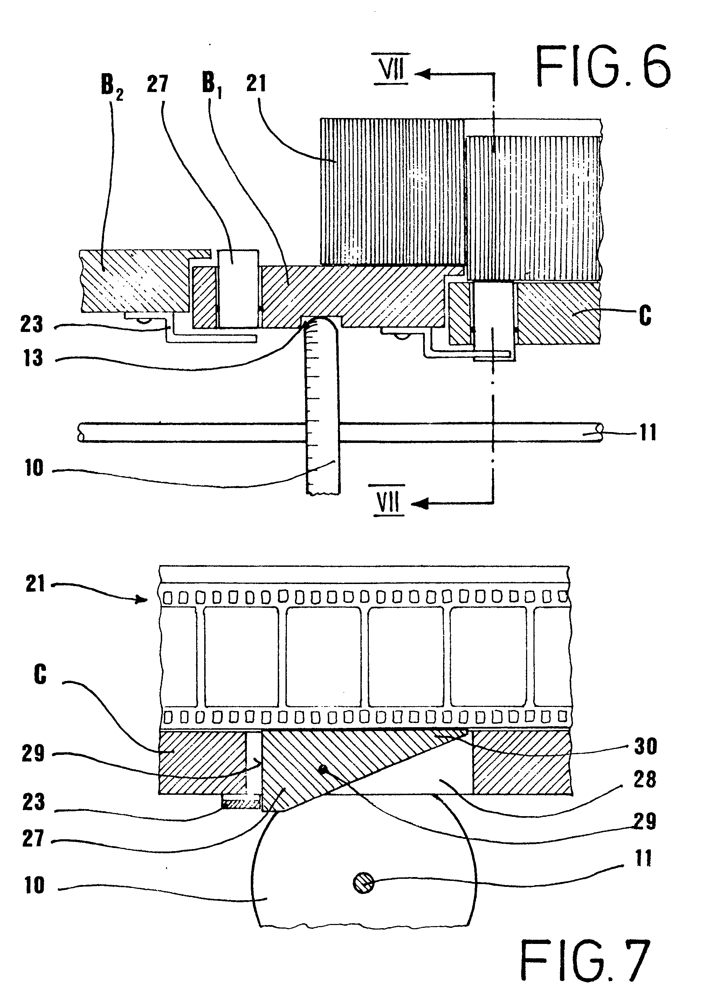

Ausgehend von der inneren Ringscheibe C sind alle nachfolgenden Ringscheiben jeweils um einen Betrag von wenigen Millimetern in der Höhe ansteigend angeordnet. Die Innenkanten der Zwischen-Ringscheiben $B_1 - B_7$ sowie der äußeren Ringscheibe A weisen eine falzartige Ausbildung auf, so daß die jeweils nach außen folgende Ringscheibe den Zwischenraum zwischen ihr und der innenliegenden Ringscheibe sowie deren Rand überdeckt (vergl. Fig. 3 und Fig. 6).

Durch diese Ausbildung wird verhindert, daß eine einzelne Bandwindung zwischen die Ringscheiben hindurchfallen bzw. eingeklemmt werden kann.

Sämtliche Ringscheiben sind auf Scheibenrädern 10 gelagert, welche entsprechend ihrer Zuordnung zu den einzelnen Ringscheiben, verschieden große Durchmesser aufweisen und in entsprechendem Abstand auf einer Achse 11 angeordnet sind. Die den Scheibenrädern gemeinsamen Achsen 11 sind jeweils mittels Lagern 12 auf den vier Armen der kreuzförmig ausgebildeten Halterung 4 befestigt. (Vergl. Fig. 2.) Die Ringscheiben weisen auf ihrer Unterseite eine Ringnut 13 auf, die innere Ringscheibe C ist dagegen wegen ihrer größeren Breite mit zwei Ringnuten versehen. Diese Ringnuten dienen als Laufbahnen für die Scheibenräder 10 und übernehmen neben der Lagerung der Ringscheiben auf den Scheibenrädern 10 auch gleichzeitig die genaue konzentrische Führung der einzelnen Ringscheiben.

Die Genauigkeit der Ausbildung der Ringnuten 13 und damit der Seitentoleranz zwischen diesen und den Scheibenrändern 10 bedingen gleichzeitig die Vorgabe der zwischen den Ringscheiben vorzusehenden Zwischenräume.

Von den Ringscheiben werden direkt nur die innere Ringscheibe C und die äußere Ringscheibe A von getrennt angeordneten Motoren angetrieben. Die Antriebsmotore sind in den Zeichnungen nicht dargestellt. So kann z. B. die äußere Ringscheibe A durch einen auf der Halterung 4 in der Nähe des Pfosten 5 montierten Elektromotor über ein Reibrad an ihrem Außenrand angetrieben werden. Ebenfalls kann die innere Ringscheibe C mittels eines Reibrades an ihrer Unterseite angetrieben werden.

Wesentlich ist, daß beide Antriebe in Abhängigkeit des aufgewickelten bzw. entnommenen Bandes geregelt werden. Hierzu sind zwei voneinander getrennte, die Umdrehungsgeschwindigkeiten der entsprechenden Ringscheiben steuernde Einrichtungen vorgesehen.

Die Umdrehungsgeschwindigkeit der äußeren Ringscheibe A wird in Abhängigkeit von der Aufwickelgeschwindigkeit des von der Bandführung 9 vom Projektor 7 zugeführten Bandes über eine Einrichtung 14 gesteuert. Diese Steuereinrichtung 14 weist eine auf einer vertikalen Achse 15 angeordnete Umlenkrolle 16 auf, um welche das aufzuwickelnde Band geführt ist. Die Achse 15 ist auf einem Hebelarm 17 befestigt, welcher an einer geeigneten Stelle an der Halterung 4 oder am stationären Kern D schwenkbar gelagert und mit einer die Drehzahl des Antriebsmotors der äußeren Ringscheibe A steuernden elektrischen Regeleinrichtung verbunden ist. In Abhängigkeit von dem in der Bandführung 8 auftretenden Bandzug kann die Umlenkrolle 16 unter Federwirkung nachgeben und über den Hebelarm 17 die Steuereinrichtung dahingehend beeinflussen, daß die Aufwickelgeschwindigkeit über die äußere Ringscheibe A vermindert oder beschleunigt wird.

Eine die Umdrehungsgeschwindigkeit der inneren Ringscheibe C steuernde Einrichtung 18 befindet sich auf dem stationären Kern D in Verbindung mit der Entnahmevorrichtung 2 zum Herausführen des Bandes aus dem inneren Umgang des Bandwickels. Diese Vorrichtung ist Gegenstand des Patents 1 952 592 desselben Anmelders und soll an dieser Stelle nicht näher beschrieben werden.

Beiden Steuereinrichtungen ist gemeinsam, daß sie eine die Drehzahl der entsprechenden Ringscheiben beeinflussende Reguliereinrichtung betätigen, welche im wesentlichen aus einem Stellmotor und einem von diesem verstellbaren Drehtransformator bestehen. Entsprechend einer Speisung über vorgesehene Schaltvorrichtungen dreht sich der Stellmotor im Sinne einer Vermehrung bzw. Verminderung der am Drehtransformator abgegriffenen Spannung und bewirkt damit eine entsprechende Erhöhung bzw. Verminderung der Drehzahl des vom Drehtransformator gespeisten Antriebsmotors für die Ringscheiben.

Auf dem äußeren Rand des inneren stationären Kerns D sind in bestimmten Abständen angeordnete um vertikale Achsen drehbare Leitrollen 19 angeordnet, gegen welche sich die innere Windung des abzuführenden Bandes zeitweise anlegen kann. Lediglich in dem Bereich der Zuführung des abzunehmenden Bandes in die Steuer- und Entnahmevorrichtung 18 bzw. 2 fehlen solche Leitrollen.

Da die verschiedenen Ringscheiben während des Betriebes der Vorrichtung von dem bzw. den aufgelegten Bandwickeln belegt sind, ergibt sich die Notwendigkeit, daß entsprechende Zwischen-Ringscheiben entweder mit der gleichen Umdrehungsgeschwindigkeit wie die äußere Ringscheibe A oder die innere Ringscheibe C angetrieben werden. Hierzu sind zwei unterschiedliche Kupplungssysteme vorgesehen.

Fig. 3, 4 und 5 veranschaulichen das System der Überholkupplungen 20. Dargestellt ist in Fig. 3 der teilweise Schnitt durch die Zwischen-Ringscheiben $B_1$, $B_2$ und $B_3$. Die Zwischen-Ringscheiben $B_1$ und $B_3$ sind jeweils mit Teilen der beiden Wickel 21 und 22 belegt. Der innere Bandwickel 21 dreht sich zusammen mit der Zwischen-Ringscheibe $B_1$ entsprechend der Umdrehungsgeschwindigkeit der inneren Ringscheibe C, welche sich in Abhängigkeit von der Abwickelgeschwindigkeit der inneren Windung des Bandwickels 21 dreht. Der äußere Bandwickel 22 dreht sich dagegen zusammen mit der Zwischen-Ringscheibe $B_3$ und den übrigen Zwischen-Ringscheiben $B_4$—$B_7$ mit der Umdrehungsgeschwindigkeit der äußeren Ringscheibe A, welche wiederum abhängig ist von der Aufwickelgeschwindigkeit der äußeren Windung des Bandwickels 22. Aufgrund des Unterschiedes zwischen Aufwickel- bzw. Abwickelgeschwindigkeit muß sich die Zwischen-Ringscheibe $B_1$ schneller drehen als die Zwischen-Ringscheibe $B_3$. Die zwischen diesen beiden Ringscheiben angeordnete und noch nicht von Bandwindungen belegte Zwischen-Ringscheibe $B_2$ könnte sich noch frei drehen bzw. theoretisch still stehen. Aufgrund der konstruktiven Ausbildung wird sie jedoch mittels der Überholkupplung 20 und eines winkelförmigen Mitnehmers 23 von der Zwischen-Ringscheibe $B_3$ mitgenommen. Dieser Mitnehmer 23 der Zwischen-Ringscheibe $B_3$ legt sich gegen die um eine Achse 24 drehbare und vertikal nach unten hängende Überholkupplung 20, welche sich wiederum gegen die Seitenwand 25 der Aussparung 26 anlegt. Hierdurch wird die Zwischen-Ringscheibe $B_2$ von der außen liegenden Zwischen-Ringscheibe $B_3$ mit gleicher Umdrehungsgeschwindigkeit mitgenommen. (Vergl. Fig. 4.)

Die Überholkupplung 20 der Zwischen-Ringscheibe $B_1$ dagegen kann den Mitnehmer 23 der sich langsamer drehenden Zwischen-Ringscheibe $B_2$ passieren, da sich die Überholkupplung 20 um ihre Achse 24 drehen und in die Aussparung 26 einlegen kann. Sobald der Mitnehmer 23 überholt ist, wird die Überholkupplung 20 durch ihr Gewicht wieder senkrecht nach unten hängen (Vergl. Fig. 5). Durch die Anordnung dieser Überholkupplungen ist gewährleistet, daß sämtliche Zwischen-Ringscheiben $B_1$—$B_7$ mindestens stets mit der gleichen Umdrehungsgeschwindigkeit wie die äußere Ringscheibe A bewegt werden.

Soll eine Zwischen-Ringscheibe schneller bewegt werden, also infolge der Belegung durch den von der inneren Ringscheibe C nach außen wachsenden inneren Bandwickel 21, muß die entsprechende Zwischen-Ringscheibe an die sich schneller drehende innere Ringscheibe angekoppelt werden. Hierzu sind schaltbare Kupplungen 27 vorgesehen, welche als hebelförmige Wippen ausgebildet sind (Fig. 6 und 7). Diese Kupplungen 27 sind jeweils an den äußeren Rändern der inneren Ringscheibe C und der Zwischen-Ringscheiben $B_1$ bis $B_6$ angeordnet und können sich bei eingekuppeltem Zustand gegen die Mitnehmer 23 anlegen und die jeweils nach außen benachbarte nächste Zwischen-Ringscheibe mitnehmen. Die Kupplungen 27 sind in Aussparungen 28, welche von der Oberfläche der Ringscheibe bis zu deren Unterseite durchgehend offen sind, um eine Achse 29 schwenkbar angeordnet. Weiter weisen die Kupplungen eine im wesentlichen dreieckige Form auf (vergl. Fig. 7), wobei die kürzeste Seite 29 der drei Seiten in Umdrehungsrichtung vorne liegt. Die Achse 29' ist hinsichtlich der hebelförmigen Wippenausbildung der Kupplung 27 so angeordnet, daß sich der spitze Winkel 30 der Kupplung, welcher der kürzesten Seite 29 gegenüber liegt, unter der Einwirkung des Gewichtes der Kupplung nach unten bewegt. Hierdurch gibt die Kupplung den Weg zum Passieren des Mitnehmers 23 frei.

Legt sich dagegen der wachsende Bandwickel 21 mit zunehmenden Windungen auf die über die Oberfläche des Zwischen-Ringes hinausstehende Kupplung auf, wird diese unter dem Gewicht der Bandwindungen hinuntergedrückt und legt sich sodann mit ihrer kürzesten Seite 29 gegen den Mitnehmer 23 der benachbarten äußeren Zwischen-Ringscheibe an und nimmt diese mit gleicher Umdrehungsgeschwindigkeit mit.

In einer anderen Ausführungsform sind weder Überholkupplungen 20 und Kupplungen 27 noch die notwendigen Mitnehmer 23 vorgesehen. Vielmehr werden neben der äußeren Ringscheibe A und der inneren Ringscheibe C sämtliche Zwischen-Ringscheiben $B_1 - B_7$ ebenfalls von je einem eigenen Motor angetrieben. Hierzu können Synchron-Motoren verwendet werden, welche entsprechend den Umdrehungsgeschwindigkeiten entweder der äußeren Ringscheibe oder der inneren Ringscheibe gesteuert werden. Die Zuschaltung der jeweils von dem von innen nach außen wachsenden Bandwickel zu belegenden nächstfolgenden Zwischen-Ringscheibe wird dann über entsprechend angeordnete Photozellen oder Fühleinrichtungen gesteuert. Im folgenden wird anhand des vorstehend ausführlich beschriebenen Ausführungsbeispieles der Vorrichtung das Verfahren zum Umwälzen (Durchsetzen) eines endlosen Bandes in einem Vorrat beschrieben.

Das verwendete endlose Band ist ein 35 mm Filmband, welches eine Gesamtvorführungszeit von ca. 2 Stunden aufweist. Ein solches Programm setzt sich in der Regel aus mehreren Teilen, also z. B. aus Reklamefilm, Vorfilm und Hauptfilm zusammen. Diese Filmteile befinden sich bei der Anlieferung in das entsprechende Filmtheater in verschiedenen Kassetten, wobei der Hauptfilm selbst ebenfalls in Filmrollen von gleicher, handlicher Größe unterteilt ist. Der die Vorrichtung für den Betrieb bzw. Projektion des Filmes einrichtende Vorführer wird deshalb die einzelnen Filmbänder nacheinander auf die Tragvorrichtung 1 aufspulen und jeweils das nachfolgende Filmband mit dem bereits aufgelegten Teil verkleben, bis der Film in der vorgesehenen Gesamtlänge auf der Vorrichtung aufliegt. Wesentlich ist, daß der Vorführer zunächst die innere Ringscheibe C, eventuell auch noch einen geringen Teil der ersten Zwischen-Ringscheibe $B_1$ mittels eines auflegbaren Kernes abdeckt und damit das aufgewickelte Filmband auf der Zwischen-Ringscheibe $B_1$ beginnt und die nachfolgenden Zwischen-Ringscheiben $B_2$ bis $B_7$ bedeckt. Zu beachten ist, daß die Fläche der inneren Ringscheibe C kleiner als die Fläche des kleinsten, betriebsmäßig einzusetzenden Bandwickels ist. Im Falle, daß eine solche Vorrichtung auch für Kurzfilme benutzt werden soll, muß die innere Ringscheibe C eine wesentlich kleinere Fläche als in dem hier beschriebenen Beispiel aufweisen. Dadurch würde sich selbstverständlich bei gleichem Außendurchmesser der Tragvorrichtung die Anzahl der Zwischen-Ringscheibe erhöhen.

Der Vorführer wird, nachdem er den gesamten vorzuführenden Film auf die Vorrichtung aufgelegt hat, den lose aufgelegten Kern abnehmen und damit die innere Ringscheibe C freimachen. Anschließend muß er den Filmanfang, also die erste innere Windung des aufgelegten Filmwikkels in die auf dem stationären Kern D befindliche Steuervorrichtung 18 hindurchführen bzw. einfädeln, über verschiedene, vorgesehene Umlenkrollen der Entnahmevorrichtung 2 herumlegen und schließlich über den aufgelegten Wickel hinweg in den Projektor 7 einführen und, nachdem das Filmband durch diesen hindurchgeführt ist, das aus dem Projektor 7 herausführende Band um eine außerhalb des äußeren Bandes der äußeren Ringscheibe A angeordneten Steuereinrichtung 14 bzw. deren Umlenkrolle 16 herumlegen und mit dem Ende des aufgelegten Filmbandes verkleben. Damit ist die für die Durchführung des Verfahrens notwendige Herstellung des endlosen Bandes durchgeführt. Der Filmvorführer kann damit die Vorrichtung im weiteren ferngesteuert bedienen, da kein Umspulen bzw. Neueinfädeln des Filmbandes beim Projektor 7 notwendig ist. Er ist folglich in der Lage, mehrere solche Einrichtungen von einem zentralen Steuerpult aus fernzubedienen.

Soll im folgenden die Vorführung des aufgelegten Filmbandes beginnen, sind lediglich Projektor und Vorrichtung einzuschalten. Der Projektor 7 beginnt dann das Filmband über die Steuer- und Entnahmevorrichtung 18 bzw. 2 aus dem aufgelegten Bandwickel abzuziehen. Gleichzeitig wird das aus dem Projektor abgegebene Filmband auf die äußere Windung des aufgelegten Bandwickels aufgewickelt. Dies bedeutet, daß sich zunächst der gesamte aufgelegte Filmwickel, welcher die Zwischen-Ringscheiben $B_1$ bis $B_7$ bedeckt, sich mit einer solchen Umdrehungsgeschwindigkeit drehen muß, daß in der Bandführung 9 weder zu hoher Zug noch eine zu große Schlaffung eintritt. Die von einem Elektromotor angetriebene äußere Ringscheibe A nimmt deshalb mit entsprechender Umdrehungszahl sämtliche Zwischen-Ringscheiben $B_1$ bis $B_7$ über die eingerasteten Überholkupplungen 20 und die entsprechenden Mitnehmer 23 mit. Lediglich die innere Ringscheibe C ist beim Anlauf der Vorrichtung leer. Diese Scheibe dreht sich mit einer wesentlich höheren Umdrehungsgeschwindigkeit als die übrigen Ringscheiben, wobei die Umfangsgeschwindigkeit am inneren Rand der Scheibe C zunächst wesentlich größer als die Abnahmegeschwindigkeit des Filmbandes in der Steuer- und Entnahmevorrichtung ist. Zwischen der Steuereinrichtung 18 auf dem stationären Kern D und der inneren Windung des aufgelegten Filmwickels bildet sich in Form einer losen Schleife ein über die innere Ringscheibe C hinüberführender Bandabschnitt, welcher dann durch die Reibung dieser schnell laufenden Scheibe mitgenommen wird. Es bildet sich zunächst (innerhalb der ersten 5 Sekunden seit Inbetriebnahme) ein neuer, innerer Bandwickel um den stationären Kern D herum, welcher sich mit seiner inneren Windung gegen die kreisförmig angeordneten Leitrollen 19 legt. Dieser innere Wickel wächst in seinem äußeren Durchmesser laufend, wobei der innere Durchmesser des nunmehr als äußerer Wickel zu bezeichnenden zuerst aufgelegten Wickels abnimmt. Die auf dem stationären Kern D befindliche Steuereinrichtung 18 spricht auf die Position und/oder Form des sich zwischen ihr und dem inneren Umgang des inneren Bandwickels erstreckenden Bandabschnittes und reguliert die Umdrehungsgeschwindigkeit der inneren Ringscheibe C stets so, daß die Umdrehungsgeschwindigkeit der inneren Windung des inneren Wickels der Abzugsgeschwindigkeit der Bandführung 8 und damit der Projektionsgeschwindigkeit entspricht. Aufgrund des erheblichen Unterschiedes zwischen den Umdrehungsgeschwindigkeiten des inneren und des äußeren Bandwickels wächst der innere Bandwickel wesentlich schneller als der äußere Bandwickel. In dem Moment, da der innere Bandwickel die innere Ringscheibe C vollständig belegt hat, sind die angrenzenden Zwischen-Ringscheiben $B_1$ und $B_2$ (mindestens zu einem Teil) bereits frei geworden. Wie in Fig. 6 und 7 dargestellt, ist durch das Gewicht des aufgelegten inneren Bandwickels 21 auch inzwischen die Kupplung 27 heruntergedrückt worden und nimmt über den Mitnehmer 23 die angrenzende Zwischen-Ringscheibe $B_1$ mit. Dadurch weisen $B_1$ und C gleiche Umdrehungsgeschwindigkeiten auf und der innere Filmwickel 21 kann ohne weiteres über die Zwischen-Ringscheibe $B_1$ wachsen. Dieser geschilderte Vorgang setzt sich kontinuierlich fort, bis der äußere Wickel bis auf Null abnimmt. Dies ist dadurch möglich, daß der innere Wickel durch seinen zunehmenden Außendurchmesser und der wesentlich größeren Umdrehungsgeschwindigkeit gegenüber dem äußeren Wickel zunehmend schneller wächst und gleichzeitig der äußere Wickel schneller abnimmt. Er nimmt schneller ab, als er durch das außen zugeführte und aufgewickelte Band wachsen kann. Dies bedeutet, daß der äußere Wickel nach ca. 35 Minuten aufgebraucht ist. Zu diesem Zeitpunkt drehen sich innere Ringscheibe C und sämtliche Zwischen-Ringscheiben $B_1$ bis $B_7$ mit gleicher Umdrehungsgeschwindigkeit. Wird die letzte äußere Windung des äußeren Wickels auf den äußeren Durchmesser des inneren Bandwickels übergewickelt, stellt sich durch die erhöhte Geschwindigkeit des inneren Bandwickels ein erhöhter Zug in der Bandführung 9 ein. Die Steuereinrichtung 14 mit der Umlenkrolle 16 wird in Richtung auf den Projektor 7 bewegt. Durch diese Bewegung wird über den Hebelarm 17 eine Reguliereinrichtung betätigt, welche den inneren Wickel, welcher nunmehr für eine kurze Zeit (ähnlich wie im Anfangsstadium) den einzigen auf den Zwischen-Ringscheiben $B_1$ bis $B_7$ der Tragvorrichtung aufliegenden Wickel darstellt, von der inneren Ringscheibe C abkuppelt. Hierdurch werden die Zwischen-Ringscheiben $B_1$ bis $B_7$ nunmehr geschlossen von der äußeren Ringscheibe A mittels der Überholkupplungen 20 und den Mitnehmern 23 mitgenommen. Die Steuereinrichtung 14 bewegt sich wieder zurück und reguliert nunmehr die Umdrehungszahl des Bandwickels entsprechend der Zugspannung in der Bandführung 9. Gleichzeitig hat sich wie eingangs beschrieben auf der inneren Ringscheibe C und an den Leitrollen 19 des stationären Kerns D wiederum ein neuer innerer Bandwickel gebildet. Der aufgesetzte Filmvorrat wird folglich während der Vorführzeit von ca. 2 Stunden mehrfach (drei bis vier Mal bei der beschriebenen Vorrichtung) umgewälzt bzw. durchgesetzt.

Der Vorteil bei dem anhand der Vorrichtung beschriebenen Verfahren liegt darin, daß der aufgelegte Filmvorrat auf den Ringscheiben aufruht und sich nicht gegeneinander bewegt, wie es bei allen bekannten Vorrichtungen der Fall ist. Zwischen den einzelnen Filmwindungen tritt keinerlei Friktion auf, die Filmoberfläche wird folglich geschont, die Vorführqualität erheblich vergrößert.

Außerdem kann der Film sehr dicht aufgewickelt werden. Um dies zu erreichen ist es empfehlenswert, daß der zwischen inneren und äußeren Bandwickel vorhandene und sich sehr schnell bewegende schleifenförmige Bandabschnitt leicht abgebremst wird. Dadurch entsteht ein gewisser Zug in diesem Bandabschnitt und der innere Wickel wird wesentlich fester gewickelt. Hierdurch wird erreicht, daß die flächenmäßige Ausdehnung der Tragvorrichtung verringert werden kann. Notwendig ist die Abbremsung dieser inneren Verbindungsschlaufe zwischen den beiden aufgelegten Filmwickeln jedoch nicht.

Wie bereits bei der Beschreibung der Vorrichtung erwähnt, kann der Übergang des wachsenden inneren Filmwickels von der inneren Ringscheibe C über die einzelnen Zwischen-Ringscheiben auch durch entsprechend angeordnete Photozellen bzw. Fühleinrichtungen kontrolliert werden. Durch entsprechende Impulse müssen dann die einzelnen Ringscheiben über Synchronmotoren schneller oder langsamer angetrieben werden.

**Patentansprüche**

1. Verfahren zum Umwälzen (Durchsetzen) eines endlosen Bandvorrates, insbesondere eines Kino-Filmes, in einer Vorrichtung mit einer um eine vertikale Achse drehbar angeordneten und im wesentlichen horizontalen Auflage, auf welcher der Bandvorrat in Form von zwei konzentrischen, jedoch räumlich getrennten Wickeln aufliegt, wobei die äußere Windung des äußeren Wickels über einen externen schleifenartig herausgeführten Längenabschnitt des Bandes mit der inneren Windung des inneren Wickels und die innere Windung des äußeren Wickels unmittelbar über einen internen Längenabschnitt des Bandes mit der äußeren Windung des inneren Wickels verbunden ist, dadurch gekennzeichnet, daß die Aufteilung des Bandvorrates auf die beiden Wickel während des gesamten Umwälzvorganges sich ständig ändert, dergestalt, daß der Innendurchmesser des äußeren Wickels und der Außendurchmesser des inneren Wickels infolge einer größeren Winkelgeschwindigkeit des inneren Wickels gegenüber dem äußeren Wickel ständig größer werden und daß der Innendurchmesser des inneren Wickels sowie der äußere Durchmesser des äußeren Wickels ständig größer werden infolge der Bandabnahme vom inneren Wickel bzw. der Bandzufuhr zum äußeren Wickel, bis der Bandvorrat im äußeren Wickel aufgebraucht ist, worauf die Winkelgeschwindigkeit des inneren nunmehr den gesamten Bandvorrat enthaltenden Wickels umgeschaltet wird auf die Winkelgeschwindigkeit des bisherigen äußeren Wickels und sich erneut ein mit gegenüber dem dann äußeren Wickel größerer Winkelgeschwindigkeit sich drehenden neuer innerer Wickel bildet.

2. Verfahren nach Anspruch 1, dadurch gekennzeichnet, daß der endlose Bandvorrat in Form von mehr als zwei Wickel bereitgestellt wird und daß die Winkelgeschwindigkeiten der zwischen dem äußeren und dem inneren Wickel gelegenen Wickel kleiner oder zeitweilig gleich der Winkelgeschwindigkeit des inneren Wickels und zeitweilig gleich oder größer der Winkelgeschwindigkeit des äußeren Wickels sind.

3. Verfahren nach einem der vorhergehenden Ansprüche, dadurch gekennzeichnet, daß auf den oder die internen Band-Längenabschnitte zwischen den Wickeln bremsend eingewirkt wird und die durch das Überführen des Bandes von einem äußeren Wickel auf den nächstliegenden inneren Wickel entstehenden Windungen ohne wesentlichen Luftabstand auf ihrer ganzen Länge unmittelbar aneinanderzuliegen kommen.

4. Vorrichtung zur Durchführung des Verfahrens zum Umwälzen (Durchsetzen) eines endlosen Bandvorrates, z. B. eines in einem Vorführgerät vorzuführenden Kino-Filmes, in einer Vorrichtung mit einer um eine vertikale Achse drehbar angeordneten und im wesentlichen horizontalen Auflage, auf welcher der Bandvorrat in Form von zwei konzentrischen, jedoch räumlich getrennten Wickeln aufliegt, wobei die äußere Windung des äußeren Wickels über einen externen, schleifenartig herausgeführten Längenabschnitt des Bandes mit der inneren Windung des inneren Wickels und die innere Windung des äußeren Wickels unmittelbar über einen internen Längenabschnitt des Bandes mit der äußeren Windung des inneren Wickels verbunden ist, dadurch gekennzeichnet, daß die Auflage (1) aus mindestens drei, vollständig unabhängig voneinander um einen stationären Kern (D) mit variablen Geschwindigkeiten drehbaren konzentrischen Ringscheiben (A, $B_1$ und C) besteht, wobei die äußere Ringscheibe (A) mit in Abhängigkeit von einer die Aufwickelgeschwindigkeit steuernden Einrichtung (14) änderbarer Drehzahl antreibbar und die innere Ringscheibe (C) mit ebenfalls in Abhängigkeit von einer die Abwickelgeschwindigkeit steuernden Einrichtung (18) änderbarer Drehzahl antreibbar ist und die Zwischen-Ringscheibe ($B_1$) wahlweise mit entweder der äußeren Ringscheibe (A) oder der inneren Ringscheibe (C) entsprechenden Drehzahl antreibbar ist.

5. Vorrichtung nach Anspruch 4, dadurch gekennzeichnet, daß neben der Zwischen-Ringscheibe ($B_1$) weitere, zwischen äußerer und innerer Ringscheibe (A bzw. C) gelegene Ringscheiben $B_2, B_3 \ldots B_n$) angeordnet sind.

6. Vorrichtung nach Anspruch 4 und/oder Anspruch 5, dadurch gekennzeichnet, daß die die Auflage (1) bildenden Oberflächen aller Ringscheiben annähernd in der gleichen (geometrischen) Rotationsfläche liegen, deren Achse in der Drehachse der Ringscheiben liegt.

7. Vorrichtung nach Anspruch 4, dadurch gekennzeichnet, daß die äußere Ringscheibe (A) und die innere Ringscheibe (C) jeweils durch einen in seiner Drehzahl veränderbaren Motor angetrieben werden, wobei die Drehzahlen durch in Abhängigkeit der in der Zeiteinheit zugeführten bzw. abgeführten Länge an Band steuernde Einrichtungen reguliert werden.

8. Vorrichtungen nach Anspruch 7, dadurch gekennzeichnet, daß die die Abwickelgeschwindigkeit des inneren Bandwickels steuernde Einrichtung (18) auf dem stationären Kern (D) befestigt ist.

9. Vorrichtung nach Anspruch 8, dadurch gekennzeichnet, daß die Einrichtung (18) und die Position und/oder Form des sich zwischen dem inneren Umgang des Bandwickels und der Einrichtung in Form einer losen Schleife erstreckenden Bandabschnitts anspricht und abhängig von dessen Positions- bzw. Formänderungen die Drehzahl der inneren Ringscheibe (C) beeinflußt.

10. Vorrichtung nach Anspruch 7, dadurch gekennzeichnet, daß die die Aufwickelgeschwindigkeit des äußeren Bandwickels steuernde Einrichtung (14) in Form eines unterhalb der Ringscheiben gelenkig gelagerten und um eine vertikale Achse horizontal schwenkbaren Hebelarmes (17) ausgebildet ist, welcher an seinem über den äußeren Rand der äußeren Ringscheibe (A) hinausragenden Ende eine um eine vertikale Achse (15) drehbare Umlenkrolle (16) trägt und um welche das aufzuwickelnde Band in Form einer Vorratsschlaufe zwischen Projektor und äußerem Wickel geführt ist.

11. Vorrichtung nach Anspruch 4 und Anspruch 5, dadurch gekennzeichnet, daß zwischen den aneinandergrenzenden Zwischen-Ringscheiben ($B_1$—$B_n$) und der äußeren Ringscheibe (A) jeweils Kupplungselemente (20, 23) angeordnet sind, welche so ausgebildet sind, daß sie, bezogen auf die übliche Laufrichtung der Vorrichtung, eine größere Drehzahl der jeweils innenliegenden Ringscheiben zulassen und andererseits eine Mitnahme mit mindestens der Drehzahl der äußeren Ringscheibe (A) gewährleistet ist.

12. Vorrichtung nach Anspruch 5, dadurch gekennzeichnet, daß die Kupplungselemente (20, 23) am äußeren Rand der Zwischen-Ringscheiben ($B_1$—$B_n$) als um eine Horizontale, in Radialrichtung liegende und innerhalb einer tangential zum Rand der Ringscheiben laufenden Ringnut (13) angeordneten Achse (24) drehbare einarmige Hebel (20) und als am inneren Rand der Zwischen-Ringscheiben ($B_1$—$B_n$) und der äußeren Ringscheibe (A) in Radialrichtung horizontal verlaufende angeordnete Mitnehmer (23) ausgebildet sind, welche sich gegen die unter ihrer Schwerkraft nach unten hängenden einarmigen Hebel (20) anlegen.

13. Vorrichtung nach Anspruch 4 und 5, dadurch gekennzeichnet, daß an den äußeren Rändern der inneren Ringscheibe (C) und der Zwischen-Ringscheiben ($B_1$—$B_{n-1}$), mit Ausnahme der Zwischen-Ringscheibe ($B_n$), schaltbare Kupplungen (27) angeordnet sind, welche abhängig von dem Durchmesser des inneren Wickels schaltbar sind und die Zwischen-Ringscheiben ($B_1$—$B_n$) entsprechend der Drehzahl der inneren Windung des inneren Wickels mitnehmen.

14. Vorrichtung nach Anspruch 13, dadurch gekennzeichnet, daß die Kupplungen (27) als hebelförmige Wippen ausgebildet sind, welche durch die Belastung infolge der Auflage von Windungen eines Bandwickels nach unten gedrückt werden und sich gegen die an den inneren Rändern der Zwischen-Ringscheiben ($B_1$—$B_n$) und der äußeren Ringscheibe (A) angeordneten Mitnehmern (23) anlegen.

15. Vorrichtung nach Anspruch 4 und 5, dadurch gekennzeichnet, daß die Zwischen-Ringscheiben ($B_1$—$B_n$) jeweils einen eigenen motorischen, mit variabler Drehzahl steuerbaren Antrieb aufweisen.

16. Vorrichtung nach Anspruch 15, dadurch gekennzeichnet, daß die Antriebe als Schrittmotoren ausgebildet sind, welche je nach Belegung der Zwischen-Ringscheiben ($B_1$—$B_n$) mit Windungen gruppenweise zusammengeschaltet sind.

17. Vorrichtung nach Anspruch 5, dadurch gekennzeichnet, daß die Zwischen-Ringscheiben ($B_n$) gleichgroße Flächen aufweisen.

18. Vorrichtung nach Anspruch 4 oder 17, dadurch gekennzeichnet, daß die innere Ringscheibe (C) mindestens die gleichgroße Fläche wie die Zwischen-Ringscheibe(n) ($B_n$) aufweist.

19. Vorrichtung nach Anspruch 18, dadurch gekennzeichnet, daß die innere Ringscheibe (C) eine vorzugsweise um das 1,5 bis 4,0fache größere Fläche als die Zwischen-Ringscheiben ($B_n$) aufweist.

20. Vorrichtung nach Anspruch 4 oder 17, dadurch gekennzeichnet, daß die äußere Ringscheibe (A) mindestens die gleichgroße Fläche wie die Zwischen-Ringscheibe(n) ($B_n$), vorzugsweise eine um das Doppelte größere Fläche aufweist.

21. Vorrichtung nach Anspruch 4, dadurch gekennzeichnet, daß die Fläche der inneren Ringscheibe (C) kleiner als die Fläche des kleinsten, betriebsmäßig einzusetzenden Bandwickels ist.

22. Vorrichtung nach Anspruch 4, dadurch gekennzeichnet, daß die Fläche der inneren Ringscheibe (C) vorzugsweise $1/3$ der Fläche des betriebsmäßig eingesetzten Bandwickels beträgt.

23. Vorrichtung nach Anspruch 4 und 5, dadurch gekennzeichnet, daß die Summe der Flächen der Zwischen-Ringscheiben ($B_n$) mindestens gleich, vorzugsweise größer als die Fläche des größten abzuspielenden Bandwickels ist.

24. Vorrichtung nach Anspruch 4, dadurch gekennzeichnet, daß der stationäre Kern (D) auf seinem äußeren Umfang benachbart zum inneren Rand der inneren Ringscheibe (C) im Abstand angeordnete, um vertikale Achsen drehbar gelagerte Leitrollen (19) aufweist.

25. Vorrichtung nach Anspruch 4, dadurch gekennzeichnet, daß die konzentrisch angeordneten Ringscheiben mit ihren horizontalen Oberflächen treppenförmig aneinanderliegen und daß die jeweils von innen nach außen folgende nächste Ringscheibe um einen Betrag von wenigen Millimetern ansteigt.

26. Vorrichtung nach Anspruch 4, dadurch gekennzeichnet, daß die konzentrisch angeordneten Ringscheiben eine nach innen geneigte Oberfläche und in ihrer Gesamtheit die Form eines sehr flachen Trichters aufweisen.

27. Vorrichtung nach Anspruch 25, dadurch gekennzeichnet, daß die jeweils nach außen nächstfolgend angeordnete Ringscheibe mit ihrem falzartig ausgebildeten Innenrand die nach innen benachbarte, um wenige Millimeter tiefer liegende Ringscheibe an deren Außenrand übergreift.

28. Vorrichtung nach Anspruch 4, dadurch gekennzeichnet, daß auf dem Kern (D) ein der die Aufwickelgeschwindigkeit des Bandwickels steuernden Einrichtung (18) nachgeschaltete Umlenkvorrichtung vorgesehen ist, welche das dem Projektor zuzuführende Band aus dem inneren Wickel heraus und über die Ringscheiben hinweg führt.

## Claims

1. Method of circulating putting through a stock of endless strip, more particularly a motion picture film, in an apparatus with, arranged so that it can rotate about a vertical axis, an essentially horizontal support on which the stock of strip rests in the form of two concentric but spatially separate rolls, the outer turn of the outer roll being connected, via an external section from the length of the strip that is led out in the form of a loop, to the inner turn of the inner roll, and the inner turn of the outer roll being connected via an internal section from the length of the strip directly to the outer turn of the inner roll, characterised in that the distribution of the stock of strip on the two rolls changes continuously during the complete circulation process such that the internal diameter of the outer roll and the external diameter of the inner roll continuously increase in size due to a greater angular velocity of the inner roll compared with the outer roll, and that the internal diameter of the inner roll and the external diameter of the outer roll continuously increase in size due to the removal of strip from the inner roll and the addition of strip to the outer roll until the stock of strip in the outer roll is used up, whereupon the angular velocity of the inner roll, now containing the complete stock of strip, is switched over to the angular velocity of the former outer roll and a new inner roll rotating with a greater angular velocity than the outer roll forms.

2. Method as claimed in claim 1, characterised in that the endless stock of strip is provided in the form of more than two rolls and that the angular velocities of the rolls positioned between the outer and inner roll are less than or at times equal to the angular velocity of the inner roll and at times equal to the angular velocity of the inner roll and at times equal to or greater than the angular velocity of the outer roll.

3. Method as claimed in one of the foregoing claims, characterised in that a braking effect is brought to bear on the internal section or sections from the length of strip between the rolls and the turns that result from the transfer of the strip from an outer roll to the adjacent inner roll come to lie immediately next to each other over their whole length with no appreciable air gap.

4. Apparatus for implementing the method of cirulating (putting through) a stock of endless strip, e. g. a motion picture film to be projected in a projector, in an apparatus with, arranged so that it can be rotated about a vertical axis, an essentially horizontal support on which the stock of strip rests in the form of two concentric but spatially separate rolls, the outer turn of the outer roll being connected, via an external section from the length of the strip led out in the form of a loop, to the inner turn of the inner roll, and the inner turn of the outer roll being connected via an internal section from the length of the strip directly to the outer turn of the inner roll, characterised in that the support (1) consists of at least three concentric ring plates (A, $B_1$ and C) that are capable of being rotated at variable speeds about a stationary core (D) fully independently of each other, the outer ring plate (A) being capable of being driven at changeable speeds governed by a facility (14) that controls the take-up speed and the inner ring plate (C) being capable of being driven at changeable speeds also governed by a facility (18) that controls the winding-off speed and the intermediate ring plate ($B_1$) optionally being capable of being driven either at the speed corresponding to that of the outer ring plate (A) or that of the inner ring plate (C).

5. Apparatus as claimed in claim 4, characterised in that other ring plates ($B_2$, $B_3$, ... $B_n$) are arranged beside the intermediate ring plate ($B_1$) between the outer and the inner ring plate (A and C).

6. Apparatus as claimed in claim 4 and/or claim 5, characterised in that in all the ring plates the surfaces forming the support (1) lie approximately in the same (geometrical) surface of rotation the axis of which lies in the rotational axis of the ring plates.

7. Apparatus as claimed in claim 4, characterised in that the outer ring plate (A) and the inner ring plate (C) are each driven by a motor the speed of which is variable, the speeds being regulated by controlling facilities according to the length of strip added or removed in the unit of time.

8. Apparatus as claimed in claim 7, characterised in that the facility (18) controlling the winding off speed of the inner roll of strip is fastened to the stationary core (D).

9.Apparatus as claimed in claim 8, characterised in that the facility (18) responds to the position and/or form of the section of strip extending in the form of a loose loop between the inner turn of the roll of strip and the facility and influences the speed of the inner ring plate (C) according to its change of position or form.

10. Apparatus as claimed in claim 7, characterised in that the facility (14) controlling the take-up speed of the outer roll of strip is constructed in the form of a lever arm (17) mounted with jointed supports beneath the ring plates and capable of being pivoted horizontally about a vertical axis, the lever arm carrying on its end projecting over the outer edge of the outer ring plate (A) a guide roller (16) capable of being rotated about a vertical axis (15) and round which the strip to be taken up is guided in the form of a supply loop between the projector and the outer roll.

11. Apparatus as claimed in claim 4 and 5, characterised in that arranged between the adjacent intermediate ring plates ($B_1 — B_n$) and the outer ring plate (A) respectively are coupling elements (20, 23) that are so constructed that, with reference to the usual running direction of the apparatus, they permit a greater rotational speed of each inner ring plate and, on the other hand, driving at at least the rotational speed of the outer ring plate (A) is ensured.

12. Apparatus as claimed in claim 5, characterised in that the coupling elements (20, 23) at the outer edge of the intermediate ring plates ($B_1 — B_n$) are constructed in the form of single-armed levers (20) capable of being rotated about a horizontal axis (24) lying in the radial direction and positioned in a circular groove (13) that runs tangentially to the edge of the ring plates, and, at the inner edge of the intermediate ring plates

$(B_1-B_n)$ and the outer ring plate (A), of carriers (23) running horizontally in the radial direction, which locate against the single-armed levers (20) that hang down under the force of gravity.

13. Apparatus as claim in claims 4 and 5, characterised in that at the outer edges of the inner ring plate (C) and the intermediate ring plates $(B_1-B_{n-1})$, with the exception of the intermediate ring plate $(B_n)$ are located switchable couplings (27) that are capable of being switched depending on the diameter of the inner roll and drive the intermediate ring plates $(B_1-B_n)$ according to the speed of the inner turn of the inner roll.

14. Apparatus as claimed in claim 13, characterised in that the couplings (27) are constructed in the form of lever-shaped rockers which are pressed down by the load resulting from the support of turns of a roll of strip and locate against the carriers (23) positioned at the inner edges of the intermediate ring plates $(B_1-B_n)$ and the outer ring plate (A).

15. Apparatus as claimed in claim 4 and 5, characterised in that each intermediate ring plate $(B_1-B_n)$ has its own motorised drive capable of being controlled at variable speeds.

16. Apparatus as claimed in claim 15, characterised in that the drives are in the form of stepping motors that are connected together in groups depending on the coverage of the intermediate ring plates $(B_1-B_n)$ with turns.

17. Apparatus as claimed in claim 5, characterised in that the intermediate ring plates $(B_n)$ are of equal area.

18. Apparatus as claimed in claim 4 or 17, characterised in that the area of the inner ring plate (C) is at least equal to that of the intermediate ring plate(s) $(B_n)$.

19. Apparatus as claimed in claim 18, characterised in that the area of the inner ring plate (C) is preferably 1.5 to 4.0 times the area of the intermediate ring plates $(B_n)$.

20. Apparatus as claimed in claim 4 or 17, characterised in that the area of the outer ring plate (A) is at least equal to that of the intermediate ring plate(s) $(B_n)$ and is preferably twice as large.

21. Apparatus as claimed in claim 4, characterised in that the area of the inner ring plate (C) is smaller than the area of the smallest roll of strip to be used operationally.

22. Apparatus as claimed in claim 4, characterised in that the area of the inner ring plate (C) is preferably $1/3$ of the area of the roll of strip used operationally.

23. Apparatus as claimed in claim 4 and 5, characterised in that the sum of the areas of the intermediate ring plates $(B_n)$ is at least equal to and preferably greater than the area of the largest roll of strip to be played back.

24. Apparatus as claimed in claim 4, characterised in that the stationary core (D) has on its outer periphery adjacent to the inner edge of the inner ring plate (C) guide rollers (19) arranged at intervals and capable of being rotated aout vertical axes.

25. Apparatus as claimed in claim 4, characterised in that the horizontal surfaces of the concentrically arranged ring plates are positioned next to each other in a stepped manner and that each successive adjacent ring plate from the inside to the outside rises by an amount of a few millimetres.

26. Apparatus as claimed in claim 4, characterised in that the concentrically arranged ring plates have a surface that inclines inwards and have in their totality the shape of a very shallow funnel.

27. Apparatus as claimed in claim 25, characterised in that each successively adjacent ring plate towards the outside has a recessed inner edge that overlaps the outer edge of the adjacent ring plate towards the inside that lies a few millimetres lower.

28. Apparatus as claimed in claim 4, characterised in that on the core (D) is provided a guide apparatus connected after the facility (18) controlling the take-up speed of the roll of strip, which guides the strip to be routed to the projector out of the inner roll and a way over the ring plates.

## Revendications

1. Procédé pour le déroulement d'une bande sans fin à partir d'une réserve de bande en particulier un film cinématographique, dans un dispositif comportant un support monté rotatif autour d'un axe vertical et sensiblement horizontal, sur lequel repose la réserve de bande sous forme de deux enroulements concentriques toutefois séparés spatialement, la spire extérieure de l'enroulement extérieur étant reliée par l'intermédiaire d'une section longitudinale externe de bande conformée en mode de boucle à la spire intérieure de l'enroulement intérieur et la spire intérieure de l'enroulement extérieur étant directement reliée par l'intermédiaire d'une section longitudinale interne de bande à la spire extérieure de l'enroulement intérieur, caractérisé par le fait que la répartition de la réserve de bande sur les deux enroulements pendant l'ensemble du processus de déroulement se modifie de façon constante, de façon que le diamètre intérieur de l'enroulement extérieur et le diamètre extérieur de l'enroulement intérieur deviennent constamment plus grands par suite d'une vitesse angulaire plus grande de l'enroulement intérieur par rapport à l'enroulement extérieur, et que le diamètre intérieur de l'enroulement intérieur, ainsi que le diamètre extérieur de l'enroulement extérieur deviennent constamment plus grands par suite de l'enlèvement de bande à partir de l'enroulement intérieur et de l'amenée de bande à l'enroulement extérieur, jusqu'à ce que la réserve de bande ait été consommée dans l'enroulement extérieur, après quoi on fait passer la vitesse angulaire de l'enroulement intérieur contenant maintenant la réserve de bande entière à la vitesse angulaire de l'enroulement extérieur pré-

cédent, ce qui forme un nouvel enroulement intérieur tournant de nouveau avec une vitesse angulaire plus grande que celle de l'enroulement à présent extérieur.

2. Procédé selon la revendication 1, caractérisé par le fait que la réserve de bande sans fin est prévue sous forme de plus de deux enroulements et que les vitesses angulaires des enroulements placés entre l'enroulement extérieur et l'enroulement intérieur sont inférieures à la vitesse angulaire de l'enroulement intérieur ou transitoirement égales à celle-ci et transitoirement égales à la vitesse angulaire de l'enroulement extérieur ou supérieures à celle-ci.

3. Procédé selon l'une quelconque des revendications précédentes, caractérisé par le fait que sur la ou les sections longitudinales internes de bande entre les enroulements on applique un freinage et les spires formées par le transfert de la bande d'un enroulement extérieur sur l'enroulement intérieur immédiatement suivant, viennent s'appliquer directement l'une sur l'autre sur toute leur longueur sans laisser des intervalles sensibles entre elles.

4. Dispositif pour la mise en oeuvre du déroulement d'une bande sans fin à partir d'une réserve de bande, en particulier notamment un film cinématographique destinée à être projeté dans un appareil de projection, dans un dispositif comportant un support monté rotatif autour d'un axe vertical et sensiblement horizontal, sur lequel repose la réserve de bande sous forme de deux enroulements concentriques toutefois séparés sptialement, la spire extérieure de l'enroulement extérieur étant reliée par l'intermédiaire d'une section longitudinale externe de bande conformée en mode de boucle à la spire intérieure de l'enroulement intérieur et la spire intérieure de l'enroulement extérieur étant directement reliée par l'intermédiaire d'une section longitudinale interne de bande à la spire extérieure de l'enroulement intérieur, caractérisé par le fait que le support (1) se compose d'au moins trois disques annulaires (A, $B_1$ et C) concentriques pouvant tourner d'une façon entièrement indépendante les uns des autres avec des vitesses variables autour d'un noyau (D) immobile, le disque annulaire extérieur (A) pouvant être entraîné en rotation avec une vitesse variable placée sous la dépendance d'un mécanisme (14) commandant la vitesse de renvidage et le disque annulaire intérieur (C) pouvant être entraîné en rotation avec une vitesse variable de même placée sous la dépendance d'un mécanisme (18) commandant la vitesse de dévidage, tandis que le disque annulaire intermédiaire ($B_1$) peut être entraîné en rotation avec une vitesse correspondant sélectivement à celle du disque annulaire extérieur (A) ou du disque annulaire intérieur (C).

5. Dispositif selon la revendication 4, caractérisé par le fait qu'outre le disque annulaire intermédiaire ($B_1$) sont disposés d'autres disques annulaires ($B_2$, $B_3$, ... $B_n$) placés entre les disques annulaires extérieur et intérieur (A et C).

6. Dispositif selon la revendication 4 et/ou 5, caractérisé par le fait que les surfaces de tous les disques annulaires formant le support (1) se trouvent approximativement dans la même surface (géométrique) de rotation dont l'axe coincide avec l'axe de rotation des disques annulaires.

7. Dispositif selon la revendication 4, caractérisé par le fait que le disque annulaire extérieur (A) et le disque annulaire intérieur (C) sont respectivement entraînés par un moteur dont la vitesse de rotation est variable, les vitesses de rotation étant régulées sous la dépendance des mécanismes commandant la longueur de bande amenée ou enlevée par unité de temps.

8. Dispositif selon la revendication 7, caractérisé par le fait que le mécanisme (18) commandant la vitesse de dévidage de l'enroulement de bande intérieur est fixé sur le noyau (D) immobile.

9. Dispositif selon la revendication 8, caractérisé par le fait que le mécanisme (18) réagit suivant la position et/ou la forme de la section de bande s'étendant sous la forme d'une boucle lâche entre la circonvolution intérieure de l'enroulement de bande et le mécanisme et intervient sur la vitesse de rotation du disque annulaire intérieur (C) en fonction des variations des positions ou de forme de ladite section de bande.

10. Dispositiv selon la revendication 7, caractérisé par le fait que le mécanisme (14) commandant la vitesse de renvidage de l'enroulement de bande extérieur est agencé sous forme d'un bras de levier (17) monté par articulation au-dessous des disques annulaires et pouvant pivoter horizontalement autour d'un axe vertical, ledit bras de levier portant à son extrémité faisant saillie au delà du bord extérieur du disque annulaire extérieur (A) un galet de renvoi (16) pouvant tourner autour d'un axe vertical (15) et autour duquel défile le bande à envider sous la forme de longueur de réserve entre le projecteur et l'enroulement extérieur.

11. Dispositif selon la revendication 4, et la revendication 5, caractérisé par le fait qu'entre les disques annulaires intermédiaires contigus les uns aux autres ($B_1 - B_n$) et le disque annulaire extérieur (A) sont disposés des éléments d'embrayage (20, 23) respectifs qui sont agencés de façon qu'ils autorisent, par rapport à la direction de défilement courante du dispositif, une vitesse de rotation plus grande des disques annulaires respectivement situées à l'intérieur et que par ailleurs un entraînement en rotation due disque annulaire extérieur (A) est conjointement assuré au moins à la même vitesse.

12. Dispositif selon la revendication 5, caractérisé par le fait que les éléments d'embrayage (20, 23) sont agencés sous forme de leviers (20) à un seul bras pouvant tourner autour d'un axe (24) horizontal, orienté en direction radiale et disposé dans une rainure annulaire (13) s'étendant tangentiellement au bord des disques annulaires, et de taquets d'entraînement (23) qui sont disposés de façon à s'étendre horizontalement en direction radiale sur le bord intérieur des dis-

ques annulaires intermédiaires ($B_1$—$B_n$) et du disques annulaire extérieur (A) et qui viennent en appui contre les leviers (20) à un bras pendant vers le bas sous l'effet de leur poids.

13. Dispositif selon les revendications 4 et 5, caractérisé par le fait que sur les bords extérieurs du disque annulaire intérieur (C) et des disques annulaires intermédiaires ($B_1$—$B_{n-1}$), à l'exclusion du disque annulaire intermédiaire ($B_n$), sont disposés des accouplements commutables (27) dont la commutation a lieu en fonction du diamètre de l'enroulement intérieur et qui entraînent les disques annulaires intermédiaires ($B_1$—$B_n$) de façon correspondant à la vitesse de rotation de la spire intérieure de l'enroulement intérieur.

14. Dispositif selon la revendication 13, caractérisé par le fait que les accouplements (27) sont agencés en tant que bascules en forme de leviers qui sont poussés vers le bas sous l'effet de la charge résultant de l'appui de spires d'un enroulement de bande et viennent s'appliquer contre les taquets d'entraînement (23) disposés sur les bords intérieurs des disques annulaires intermédiaires ($B_1$—$B_n$) et du disque annulaire extérieur (A).

15. Dispositif selon la revendication 4 et la revendication 5, caractérisé par le fait que les disques annulaires intermédiaires ($B_1$—$B_n$) présentent respectivement un organe d'entraînement moteur propre pouvant être commandé à vitesse de rotation variable.

16. Dispositif selon la revendication 15, caractérisé par le fait que les organes d'entraînement sont constitués par des moteurs pas à pas et sont accouplés par groupes suivant le garnissage en spires des disques annulaires intermédiaires ($B_1$—$B_n$).

17. Dispositif selon la revendication 5, caractérisé par le fait que les disques annulaires intermédiaires ($B_n$) présentent des surfaces de même grandeur.

18. Dispositif selon la revendication 4 ou 17, caractérisé par le fait que le disque annulaire intérieur (C) présente au moins une surface de même grandeur que celle du ou des disques annulaires intermédiaires ($B_n$).

19. Dispositif selon la revendication 18, caractérisé par le fait que le disque annulaire intérieur (C) présente en particulier une surface de l'ordre de 1,5 à 4,0 fois plus grande que celle des disques annulaires intermédiaires ($B_n$).

20. Dispositif selon la revendication 4 ou 17, caractérisé par le fait que le disque annulaire extérieur (A) présente au moins une surface de même grandeur que celle du ou des disques annulaires intermédiaires ($B_n$), en particulier une surface au moins deux fois plus grande.

21. Dispositif selon la revendication 4, caractérisé par le fait que la surface du disque annulaire intérieur (C) est inférieure à la surface de l'enroulement de bande le plus petit destiné à être mis en service.

22. Dispositif selon la revendication 4, caractérisé par le fait que la surface du disque annulaire intérieur (C) s'élève en particulier à $1/3$ de la surface de l'enroulement de bande mis en service.

23. Dispositif selon les revendications 4 et 5, caractérisé par le fait que la somme des surfaces des disques annulaires intermédiaires ($B_n$) est au moins égale, en particulier plus grande que la surface de l'enroulement de bande à dérouler le plus grand.

24. Dispositiv selon la revendication 4, caractérisé par le fait que le noyau immobile (D) présente sur son pourtour extérieur des galets de guidage (19) disposés distants les uns des autres de façon adjacente au bord intérieur du disque annulaire intérieur (C) et montés de façon à pouvoir tourner autour d'axes verticaux.

25. Dispositif selon la revendication 4, caractérisé par le fait que les disques annulaires disposés concentriquement, viennent s'appliquer les uns aux autres de façon que leurs surfaces horizontales soient étagées en gradins et que chaque disque est décalé en hauteur de quelques millimètres par rapport au disque immédiatement précédent en allant de l'intérieur vers l'extérieur.

26. Dispositif selon la revendication 4, caractérisé par le fait que les disques annulaires disposés concentriquement présentent une surface inclinée vers l'intérieur et donnent à l'ensemble la forme d'un entonnoir très plat.

27. Dispositif selon la revendication 25, caractérisé par le fait que chaque disque annulaire disposé de façon immédiatement suivante vers l'extérieur surmonte par son bord intérieur agencé en mode de pli le disque annulaire adjacent situé quelques millimètres plus bas vers l'intérieur, sur le bord extérieur de celui-ci.

28. Dispositif selon la revendication 4, caractérisé par le fait que sur le noyau (D) est prévu un dispositif de renvoi qui est monté en aval du mécanisme (18) commandant la vitesse de renvidage de l'enroulement de bande et qui fait sortir de l'enroulement intérieur la bande à acheminer au projecteur et la fait passer sur les disques annulaires.

FIG. 1

FIG. 2

FIG. 3

FIG. 4

FIG. 5

FIG.6

FIG.7